# EUROPEAN PATENT APPLICATION

(11) **EP 1 526 590 A2**
(43) Date of publication of application: **27.04.2005**
(21) Application number: 04255409.7
(22) Date of filing: 07.09.2004
(51) Int. Cl.: H01M 2/10, G03B 19/04

(54) **Battery and a pair of contacts, and lens-fitted photo film unit**

(30) Priority: 22.09.2003 JP 2003330530; 22.09.2003 JP 2003330532
(71) Applicant: Fuji Photo Film Co., Ltd., Kanagawa (JP)
(72) Inventor: Kamata, Kazuo, Minami-Ashigara-shi Kanagawa (JP)
(74) Representative: Stevens, Jason Paul

(57) **Abstract**

A cylindrical battery (1,80) has opposite electrodes on its one end (1a). One electrode (21) is formed in the center of the end face, and the other electrode (22) is provided around the one electrode. To make electric connection, one contact (61, 135) is fitted in the center of the end face of the one end (1a), while the other contact (62, 136) is fitted on the periphery of the one end (1a). A lens-fitted photo film unit (102) has a pair of contacts (135, 136) mounted to a top wall of a film roll chamber (122). The battery (1) is inserted from a bottom side of the film roll chamber into a hollow (138) that is formed inside the film roll (121a), with the one end (1a) having the opposite electrodes forward, till the opposite electrodes (21,22) are connected to the contacts.

## Description

### FIELD OF THE INVENTION

The present invention relates to a battery, a pair of contacts for the battery, and a method of connecting the battery to a circuit board. The present invention relates also to a lens-fitted photo film unit that is preloaded with a roll of unexposed photo filmstrip, and a battery as a power source for an electric device that is actuated by an electric power. The present invention further relates to a manufacturing method of the lens-fitted photo film unit.

### BACKGROUND ARTS

Lens-fitted photo film units having a flash device incorporated therein have been widely produced. For those lens-fitted photo film units having a flash device or a data recording device incorporated therein, a built-in power source is inevitable. The power source battery takes a certain space in the lens-fitted photo film unit. Since the lens-fitted photo film units are expected to be cheap and handy, it has been an object how to arrange the battery in the lens-fitted photo film unit.

The lens-fitted photo film unit is provided with a cartridge chamber for holding a film cartridge, and a film roll chamber for holding a roll of unexposed photo filmstrip that is previously withdrawn from the film cartridge. In the film roll chamber, the film roll unwinds itself because of its own resiliency till the outermost convolution of the film roll comes to contact with the inner wall of the film roll chamber. As a result, a hollow is formed inside the film roll in the film roll chamber. A lens-fitted photo film unit containing the power source battery in the hollow inside the film roll has been disclosed in Japanese Laid-open Patent Application No. Hei 5-142704 and US Patent No. 6081666.

In Japanese Laid-open Patent Application No. 5-142704, a spool is pivotally mounted in the film roll chamber, and the unexposed filmstrip is rolled around the spool. The spool has a hollow that extends axially throughout the spool, and the power source battery is inserted in the hollow of the spool. The power source battery is a cylindrical battery according to the ISO standard, having opposite poles on opposite ends respectively. Through openings formed through opposite ends of the spool, the opposite poles of the battery are brought into contact with electric contacts, such that the poles are kept in the electric and physical connection with the contacts while the battery is rotating along with the spool.

The second prior art, US Patent No. 6081666, discloses a similar configuration to the first prior art, but the power source battery is prevented from rotating with the spool. Besides that, in the second prior art, the film roll chamber is provided with a bottom lid, and one of the contacts, which is connected to one electrode of the battery, is exposed by opening the bottom lid. To remove the power source battery, the contact as exposed by opening the bottom lid is bent to make a way for the battery to move axially out of the film roll chamber.

The first prior art as disclosed in Japanese Laid-open Patent Application No. Hei 5-142704 has a problem that a pretty large contact resistance is generated at the contact points between the battery and the contacts while the battery is rotating. Because the power source battery supplies a relative low voltage, a large electric resistance is generated at the contact points, so that it takes a long time to charge the flash device when the battery is used as the power source for the flash device. The contact points can also be worn as they are used for a long time. Then, it becomes difficult to supply the electric power stably without interruption.

Moreover, because the above prior arts both use electric contacts that come to contact with the opposite ends of the battery, removal of the battery is not easy. As known in the art, the lens-fitted photo film units are recycled. Used lens-fitted photo film units are collected, disassembled and processed for recycling. Also the power source batteries contained in the lens-fitted photo film units are removed, checked on their capacity, and reused if they have enough capacity. For the sake of recycling, the lens-fitted photo film unit is expected to be easy to remove or unload the power source battery.

Since the lens-fitted photo film unit as disclosed in US Patent No. 6081666 needs to bend at least one of the contacts in order to remove the battery, the one contact will be deformed, and not reusable. It may be possible to mount one contact on the lid of the film roll chamber. In that case, however, the contact will have to be separated from the lid to recycle the lens-fitted photo film unit. To reuse the contact, it is necessary to remount the contact to a lid of the film roll chamber of a newly formed unit body.

Conventional handy cameras, like lens-fitted photo film units, generally use a dry cell or battery of AAA size or AA size as a power source. The AA size and AAA size dry batteries are defined by ISO standards to have a cylindrical shape with positive and negative electrodes on opposite ends.

To connect such an AA size or AAA size dry battery to a circuit board, the circuit board is usually provided with a pair of contacts in accordance with the positive and negative electrodes of the dry battery. Since these contacts are sized in accordance with the positions of the opposite ends of the dry battery, at least one contact is formed as a strip whose free end is inevitably distant from its base portion connected to the circuit board. Therefore, the contact strip can be deformed or loose its resiliency due to metal fatigue as a result of repetition of loading and unloading of the dry battery. Then, the contacts will not be able to hold the dry battery.

To solve this problem, in a lens-fitted photo film unit disclosed in Japanese Laid-open Patent Application 2000-267229, a contact strip is put through an isolating cover film around the dry battery, so that the contact strip comes to contact with a peripheral wall of the dry battery. Because the peripheral wall of the dry battery is formed integrally with one end face that serves as one electrode, the contact strip is electrically connected to the one electrode as it is brought into contact with the peripheral wall. Thus, the length of the contact strip is reduced.

In a camera disclosed in Japanese Patent No.3350742, a forked contact strip is pressed against shoulders of a positive electrode of the dry battery to make an electric connection, because the positive electrode is stepped out of its periphery. This configuration contributes to reduce the distance between terminals of the opposite contacts.

On the other hand, those cameras, which are more expensive than the lens-fitted photo film units, are provided with a battery chamber that is dimensioned in accordance with the contour of the battery. The battery is usually inserted in its axial direction into the battery chamber. Because the dry battery is held by internal walls of the battery chamber, electric contacts do not need to have a resiliency that would be necessary for holding the battery in the above mentioned prior arts. The battery chamber has a lid to open and close the chamber. In a case where the battery is inserted in the axial direction into the battery chamber, the contact chip for the one electrode of the battery is disposed on the lid of the battery chamber, whereas the other contact chip for the other electrode is mounted to the innermost wall of the battery chamber. The contact chip on the lid is electrically connected through a flexible substrate or the like, so that it may not hinder the movement of the lid.

According to these prior arts, since the contact strips are still required to hold the dry battery at its opposite ends, at least one of the contact strips still has a certain length. Therefore, there remain risks that the long contact strip can be deformed or loose holding power as the result of repetitive loading and unloading of the dry battery.

It may be possible to provide a handy camera with such a battery chamber that holds the dry battery by its internal walls. However, because the flexible substrate is pretty expensive, this solution will involve a cost rise. This is disadvantageous for the handy cameras, especially for the lens-fitted photo film units, whose production cost is expected to be as low as possible. Indeed there is such a battery chamber that holds two or four dry batteries, and does not need a flexible substrate, because these batteries are connected in series through terminal members that are disposed on a battery chamber lid. But most of the handy cameras do not need more than one dry battery. Using more than one dry battery will go against the cost saving. Moreover, the walls that are designed to hold the dry battery will not only raise the cost but also hinder saving the space around the battery. So it is hard to provide such walls in the handy camera.

In addition to that, the above mentioned Patent documents merely disclose how to connect the dry battery, but do not particularly disclose how to remove the dry battery. That is, these prior arts do not think of facilitating exchanging the batteries.

### SUMMARY OF THE INVENTION

In view of the foregoing, an object of the present invention is to provide a battery and a connecting device for this battery at low costs, wherein the battery should be connected to a circuit through the connecting device even if the battery is loaded as a single piece in the connecting device. The connecting device of the present invention should hold the battery stably without being deformed or without loosing its resiliency or rigidity, even after many times of battery exchanging. The battery of the invention and the corresponding connecting device should be able to save the space around the battery and thus contribute to making the whole article compact, and also facilitate exchanging the battery.

Another object of the present invention is to provide a lens-fitted photo film unit that is compact and improved in the way of mounting a power source battery in a film unit body such that the battery is kept in stable electric connection with contacts, and is easy to remove from the lens-fitted photo film unit body for the sake of recycling.

To achieve the above and other object, the present invention provides a battery of a cylindrical shape, which has opposite electrodes disposed on its one end portion.

According to a preferred embodiment, the battery comprises a cylindrical periphery and opposite end faces that extend substantially perpendicularly to the cylindrical periphery, wherein a first one of the electrodes is placed in a center of one of the end faces, whereas a second one of the electrodes comprises an end portion of the cylindrical periphery, that is placed around the first electrode.

According to the present invention, a pair of electric contact members for the battery of the invention holds the one end portion of the battery, while being connected electrically to the opposite electrodes of the battery.

According to a preferred embodiment, a first one of the electrodes is formed as a recessed portion in a center of one end face of the battery, and a second one of the electrodes is placed around the first electrode and comprises an end portion of a cylindrical periphery of the battery, whereas the contact members comprise a projection that is fitted in the recessed portion, and a ring member that is fitted on the end portion of the cylindrical periphery of the battery.

According to the present invention, a method of connecting a cylindrical battery to a circuit board comprising steps of forming the battery to have electrodes of opposite polarities on its one end portion; and mounting a pair of electric contact members on the circuit board, the contact members being configured to hold the one end portion of the battery, while being connected electrically to the opposite electrodes.

A lens-fitted photo film unit of the present invention, which is preloaded with a photo film cartridge and having a photographic mechanism and at least an electric device incorporated therein, comprises a film roll chamber containing a roll of the unexposed photo filmstrip that is previously withdrawn from a cartridge shell of the photo film cartridge; a cylindrical battery for supplying power to the electric device, the battery being placed in a hollow that is formed inside the film roll in the film roll chamber, with an axial direction of the battery in parallel to a rotary axis of the film roll, the battery having opposite electrodes on its one end portion that is placed in an innermost position of the film roll chamber with respect to an inserting direction of the battery into the hollow; and a pair of electric contact members disposed in the innermost position of the film roll chamber, the contact members holding the one end portion of the battery, while being connected to the opposite electrodes of the battery.

The present invention also provides a lens-fitted photo film unit having a photographic mechanism and at least an electric device incorporated therein, and containing a roll of unexposed photo filmstrip that is previously withdrawn from a cartridge shell and coiled into the roll by use of a winding shaft. The lens-fitted photo film unit of the present invention comprises a film roll chamber having an open rear side and an open bottom side, for permitting loading the film roll in the film roll chamber; a light-shielding cover for covering the rear side of the film roll chamber in a light-tight fashion; a stop wall formed at the bottom of the film roll chamber to protrude radially inwards from a semi-cylindrical inner wall of the film roll chamber, for stopping the film roll from moving in its axial direction and slipping out of the film roll chamber; a cutout formed through the stop wall, for permitting pulling the winding shaft out of the film roll after the film roll is placed in the film roll chamber; a cylindrical battery for supplying the electric device, the battery having opposite electrodes on its one end portion and being placed in a hollow that is formed inside the film roll after the winding shaft is pulled out of the film roll through the cutout , the battery being inserted into the hollow through the cutout with the one end portion placed forward and with its axial direction in parallel to a rotary axis of the film roll; and a lid member for closing the bottom side of the film roll chamber, the lid member covering the stop wall in its closed position, and being opened to remove the battery from the film roll chamber.

According to a preferred embodiment, the lens-fitted photo film unit further comprises a pair of electric contact members disposed in an uppermost position of the film roll chamber to hold the one end portion of the battery while being connected to the opposite electrodes.

A first one of the electrodes is preferably formed as a recessed portion in a center of one end face of the battery, while a second one of the electrodes is placed around the first electrode and comprises an end portion of a cylindrical periphery of the battery. In that case, the contact members comprise a projection that is fitted in the recessed portion, and a ring member that is fitted on the end portion of the cylindrical periphery of the battery.

The present invention also provides a method of manufacturing a lens-fitted photo film unit that comprises a photographic mechanism, at least an electric device, a film roll chamber containing a roll of unexposed photo filmstrip, a light-shielding cover covering an open rear side of the film roll chamber, a bottom lid for closing a bottom side of the film roll chamber, and a stop wall protruding radially inwards from an inner wall of the film roll chamber, the stop wall being in contact with a bottom end face of the film roll for stopping the film roll from slipping out of the film roll chamber, the stop wall being located inside the bottom lid when the bottom lid closes the bottom side of the film roll chamber.

The manufacturing method of the present invention comprises steps of using a cylindrical battery for supplying the electric device, the battery having opposite electrodes on its one end portion; mounting a pair of contact members for the battery in the film roll chamber at its uppermost position; withdrawing the unexposed photo filmstrip from a cartridge shell and winding it around a winding shaft; covering the open rear side of the film roll chamber with the light-shielding cover, after the winding shaft with the unexposed photo filmstrip around it is placed in the film roll chamber; pulling, thereafter, the winding shaft out of the film roll through a cutout formed through the stop wall; inserting the battery through the cutout into a hollow that is formed inside the film roll after the winding shaft is pulled out of the film roll, with the one end portion of the battery placed forward and with its axial direction in parallel to a rotary axis of the film roll till the opposite electrodes are connected to the contact members; and closing, thereafter, the bottom side of the film roll chamber with the bottom lid, thereby to stop the battery from moving in its axial direction.

Because the negative and positive contacts have only to hold one end portion of the battery, they can be so small that they are hardly deformed or loose resiliency due to metal fatigue even after many times of battery loading and unloading.

Loading the battery in the hollow inside the film roll improves space efficiency of the lens-fitted photo film unit.

The battery is securely fitted in the battery holder just by pushing the battery into the hollow in its axial direction, with its one end portion having the opposite electrodes forward. Because the battery is removed from the battery holder just by pulling it in its axial direction, it is also easy to remove the battery from the battery holder. This is convenient for recycling.

### BRIEF DESCRIPTION OF THE DRAWINGS

The above and other objects and advantages will be more apparent from the following detailed description of the preferred embodiments when read in connection with the accompanied drawings, wherein like reference numerals designate like or corresponding parts throughout the several views, and wherein:
Figure 1 is a perspective view of a battery according to an embodiment of the present invention;
Figure 2 is an exploded perspective view of the battery according to the first embodiment;
Figure 3 is a sectional view of the battery according to the first embodiment;
Figure 3A is an enlarged fragmentary sectional view of a cylindrical periphery of the battery;
Figure 4 is a perspective view of a lens-fitted photo film unit;
Figure 5 is an exploded perspective view of the lens-fitted photo film unit;
Figure 6 is a perspective view of a flash unit of the lens-fitted photo film unit, having a battery holder for the battery of the present invention;
Figure 7 is an exploded perspective view illustrating electric contacts of the battery holder of Fig.6;
Figure 8 is a sectional view of a battery according to a second embodiment of the present invention;
Figure 8A is an enlarged fragmentary sectional view of a cylindrical periphery of the battery of Fig.8;
Figure 9 is a perspective view of a lens-fitted photo film unit according to an embodiment of the present invention;
Figure 10 is an exploded rear perspective view of the lens-fitted photo film unit of Fig.9;
Figure 11 is a sectional view showing essential parts of a power source battery for use in the lens-fitted photo film unit;
Figure 12 is an exploded perspective view of a battery holder for the battery of Fig.11;
Figure 13 is a sectional view of a film roll chamber of the lens-fitted photo film unit of Fig.9;
Figure 14 is an enlarged sectional view showing the battery holder mounted in an upper wall of the film roll chamber of Fig.13;
Figure 15 is a perspective view illustrating a process of winding a filmstrip into a roll in the film roll chamber;
Figure 16 is a fragmentary perspective view illustrating a stop wall and a protrusion, which protrude radially inwards at the bottom of the film roll chamber;
Figure 17 is a fragmentary perspective view of the stop wall and the protrusion as mated to each other at the bottom of the film roll chamber; and
Figure 18 is a sectional view of a battery holder according to another embodiment of the present invention, wherein negative and positive contacts are mounted to a base member, and the base member is mounted to a top side of a film roll chamber.

### DETAILED DESCRIPTION OF THE PREFERRED EMBODIMENTS

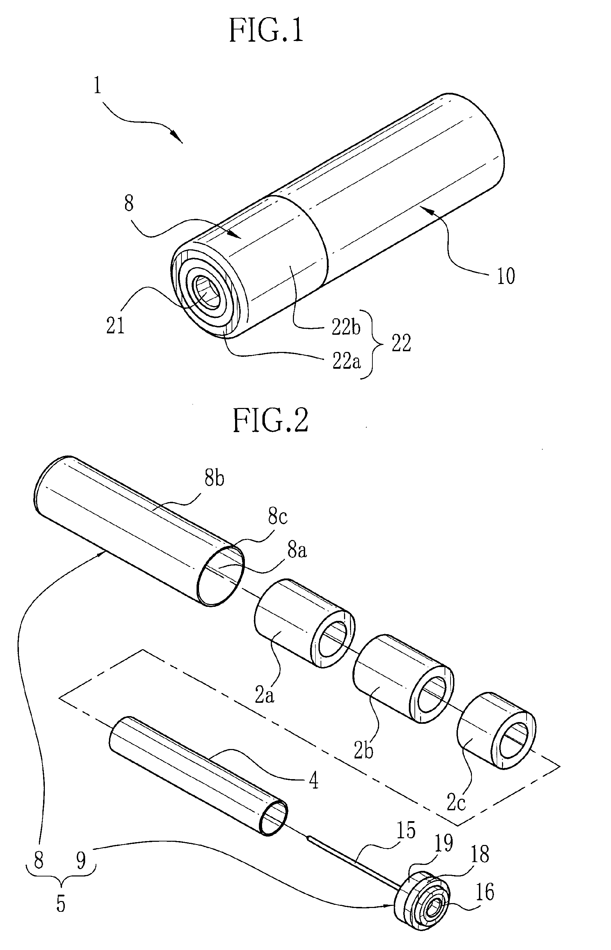

Figs. 1 to 3 shows a dry battery according to an embodiment of the present invention. The dry battery 1, hereinafter called the battery, is an alkaline cell that consists of first to third positive electrolytes 2a, 2b and 2c, a negative electrolyte 3, a separator 4, and a case 5 for containing these materials.

The positive electrolytes 2a to 2c are each formed as a solid ring made by mixing and kneading MnO2 as an active material of the positive electrode with kalium hydroxide solution as electrolytic solution, and other minor materials. The first to the third positive electrolytes 2a to 2c are arranged in series and coaxial to each other inside the casing 5. As a minor material of the positive electrolytes 2a to 2c, conductivity co-adjuvant, such as graphite, acetylene black or Ketchen black (a trade name), may be added.

The casing 5 consists of a case shell 8 and a sealing device 9, as shown in Fig. 2. The case shell 8 is made of a steal blade, and is formed into a substantially cylindrical shape by stamping. The case shell 8 is closed on one end and has an open end on the opposite side. The sealing device 9 closes the open end of the case shell 8. An isolating label 10 is put around an outer periphery 8b of the case shell 8.

A conductive layer is formed around an internal periphery of the case shell 8. The conductive layer is formed by applying a conductive material, such as graphite powder. As the positive electrolytes 2a to 2c are inserted into the case shell 8, the external peripheries of the positive electrolytes 2a to 2c fit on the conductive layer of an inner periphery 8a of the case shell 8, so the positive electrolytes 2a to 2c are electrically connected to the case shell 8.

The separator 4 is made from a material that is resistant to alkaline electrolytic solution. For example, the separator 4 is formed by pressing a non woven fabric of a resin material, to have a substantially cylindrical shape with one end open and the other end closed. The size of the separator 4 is defined by the internal diameter of the positive electrolytes 2a to 2c. The separator 4 is fitted in the internal periphery of the positive electrolytes 2a to 2c.

And the negative electrolyte 3 is filled inside the separator 4. As an example, the negative electrolyte 3 is a mixture of zinc powder as a negative electrode active material, kalium hydroxide solution as an electrolytic solution, a thickener and other minor materials. The thickener is used for diffusing the negative electrode active material equally in the electrolytic solution, and thus keeping the negative electrolyte 3 gelatinous. The gelatinous negative electrolyte 3 is filled in the separator 4 by pouring through the open end of the separator 4. Because the separator 4 is made of an alkaline resistant material, the separator 4 electrically insulates and also physically separates the positive electrolytes 2a to 2c and the negative electrolyte 3 from each other.

The sealing device 9 consists of a negative collector 15, a negative terminal member 16, a gasket 17, a sealing ring 18 and a fixation ring 19. The negative collector 15 is formed to be a bar from a metal such as brass. One end of the negative collector 15 is inserted in the gelatinous negative electrolyte 3, while an opposite end protrudes out of the negative electrolyte 3. On the protruding end of the negative collector 15 out of the negative electrolyte 3, a flange 15a is formed integrally. The gasket 17 of a flat ring shape is securely put on an inside surface of the flange 15a. The negative terminal member 16 is disposed in contact with an outside end face 15b of the flange 15a of the negative collector 15. The sealing ring 18 is securely fitted on the negative terminal member 16, and the fixation ring 19 is securely fitted on the sealing ring 18. The sealing ring 18 is formed from an isolating resin, and is provided with an engaging groove 18a around its outer periphery, and an engaging groove 18d in its face end 18b along its rim 18c. The fixation ring 19 has an engaging tip 19a and a fitting opening 19b. The gasket 17 is fitted in the fitting opening 19b, whereas the sealing ring 18 is engaged with the fixation ring 19 as the engaging tip 19a is force-fitted in the engaging groove 18a of the sealing ring 18. Thereby, the negative collector 15 is tightly coupled to the negative terminal member 16.

To fit the sealing device 9 in the case shell 8, the negative collector 15 having the negative terminal material 16, the gasket 17, the sealing ring 19 and the fixation ring 19 fitted thereon is stuck into the negative electrolyte 3. Thereafter, a rim 8c of the case shell 8 is bent inwards along the rim 18c of the sealing ring 18, and is engaged in the engaging groove 18d of the sealing ring 18. In this way, the open end of the case shell 8 is sealed with the sealing device 9.

The negative terminal member 16 is exposed through an opening 18e of the sealing ring 18, and is centered with an axis of the case shell 8. The negative terminal member 16 has a cylindrical recess 21 that is recessed from an outer end of the negative terminal member 16, and this recess 21 serves as a negative electrode of the battery 1. As described above, the case shell 8 is covered with the isolating label 10, except but a rim 22a surrounding the negative electrode 21 and an end portion 22b of the cylindrical periphery, which borders the rim 22a. The rim 22a and the end portion 22b of the cylindrical periphery of the case shell 8 serve as a positive electrode 22. The sealing ring 18 as formed from an isolating material isolates the negative electrode 2.1 from the positive electrode 22. Accordingly, the negative and positive electrodes 21 and 22 of the battery 1 are both located on the same end area of the battery 1. It is to be noted that the end area of the battery 1 as having both electrodes 21 and 22 includes the exposed end face and the end portion 22b of the cylindrical periphery of the battery 1 and a portion inside the end portion 22b.

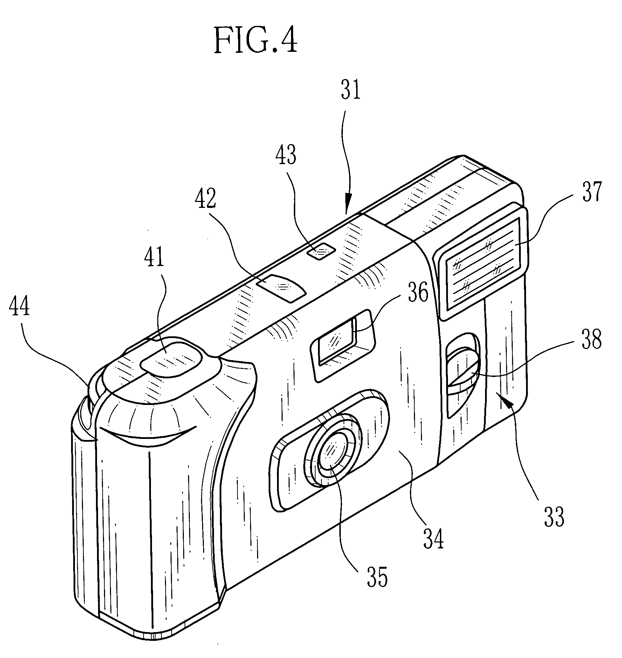

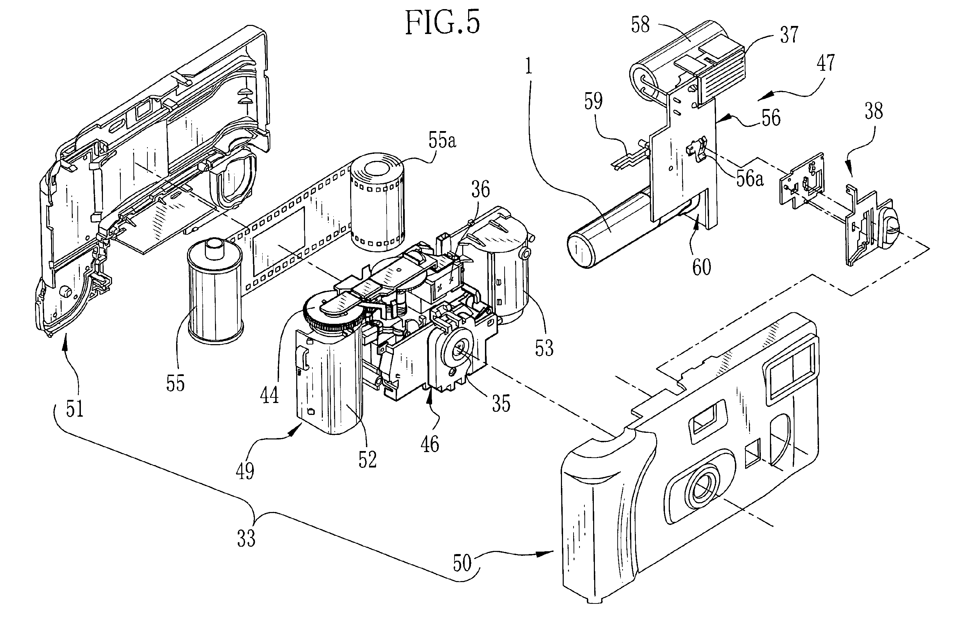

Figs.4 and 5 show a lens-fitted photo film unit 31 that uses the above-described battery 1 as a power source. The lens-fitted photo film unit 31 consists of a film unit body 33 having a photographic mechanism incorporated therein, and an ornamental label 34 put around the film unit body 33. The film unit body 33 has at its front side a photographic lens 35, a viewfinder objective window 36, a flash light emitting portion 37, and a flash charge button 38. The film unit body 33 is provided at its top side with a shutter release button 41, an exposure counter window 42 , and a light guide 43 as a flash charge completion indicator. On the rear side of the film unit body 33 are provided a film winding knob 44 and an ocular side viewfinder window.

As shown in Fig.5, the film unit body 33 is constituted of a body basic portion 49 having an exposure device 46, a flash device 47 and other mechanisms mounted thereto, and front and rear cover portions 50 and 51 attached to the body basic portion 49 to cover the front and rear sides thereof. The front cover portion 50 is formed with openings for exposing the photographic lens 35, the viewfinder objective lens 36, the flash light emitting portion 37, the flash charge button 38 and other necessary parts. The body basic portion 49 is formed integrally with a cartridge chamber 52 and a film roll chamber 53 on its opposite horizontal sides, and has an exposure device 46 mounted between these chambers 52 and 53. The cartridge chamber 52 holds a photo film cartridge 55, while the film roll chamber 53 holds a roll of unexposed photographic film 55a that is withdrawn from the photo film cartridge 55. The flash device 47 is mounted between the exposure device 46 and the film roll chamber 53 through hooks.

The flash device 47 is a unit that has a flash light emitting portion 37, a main capacitor 58, a synch-switch 59, a battery holder 60 and other elements mounted integrally on a circuit board 56. When the flash charge button 38 is slid upward, a metal contact 56a of a charge switch, which is provided on the circuit board 56, is actuated to turn the charge switch ON, starting charging the main capacitor 58. The flash device 47 is designed to emit a flash of light when the synch-switch 59 is turned on by a not-shown shutter blade that swings when a shutter mechanism is actuated by pressing the release button 41.

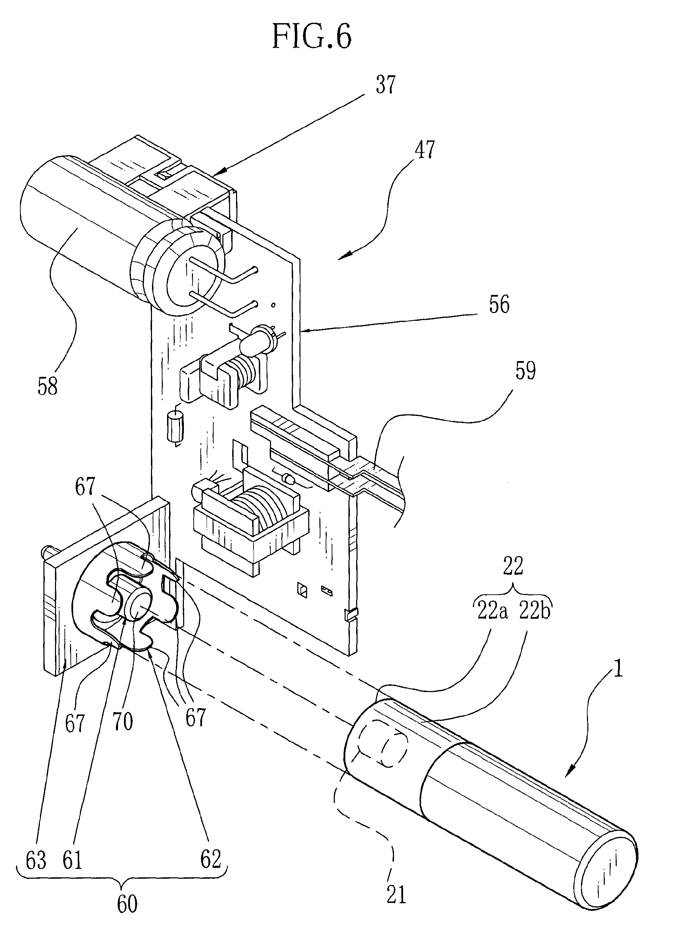

As shown in Fig.6, the battery holder 60 is constituted of a negative contact 61, a positive contact 62 and a subsidiary circuit board 63, so that electric power is supplied to the flash circuit when the battery 1 is attached to the battery holder 60.

The subsidiary circuit board 63 is securely joined to one end of the circuit board 56, and is connected electrically to the circuit board 56 through soldering.

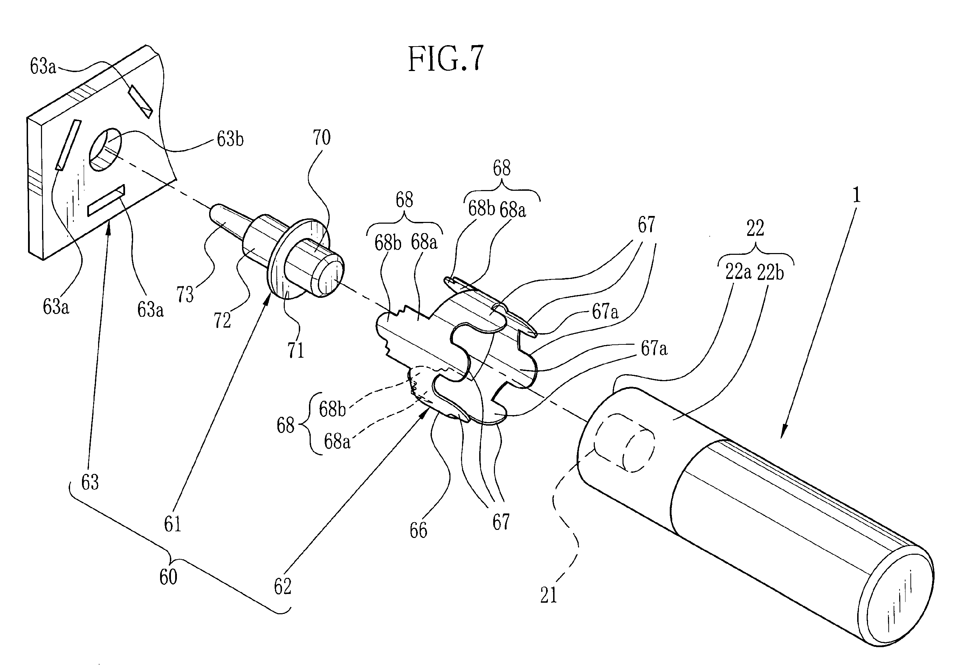

As shown in detail in Fig. 7 , the positive contact 62 is formed by bending a metal blade into a cylindrical shape. The positive contact 62 consists of a cylindrical portion 66 and a number of force-fitting lugs 67 and engaging lugs 68. The force-fitting lugs 67 protrude axially from the cylindrical portion 66, and are spaced by an equal angle from each other. The force-fitting lugs 67 form a circle whose internal diameter is adjusted to an external diameter of the cylindrical end portion 22b of the battery 1, so that the cylindrical end portion 22b is brought into tight contact with internal surfaces 67a of the force-fitting lugs 67. Thereby, the positive contact 62 securely holds the battery 1 while making electrical connection to the positive electrode 22.

The engaging lugs 68 protrude axially from the cylindrical portion 66 but in the opposite direction to the force-fitting lugs 67. Each of the engaging lugs 68 consists of an engaging portion 68a and a soldering protrusion 68b that is located on the tip of the engaging portion 68a. The engaging portions 68a are put through engaging slots 63a of the subsidiary circuit board 63, and then the soldering protrusions 68b are bent to mount the positive contact 62 to the subsidiary circuit board 63 by calking. Thereafter, the soldering protrusions 68b are soldered on the subsidiary circuit board 63. In this way, the positive contact 62 is securely mounted and electrically connected to the subsidiary circuit board 63.

Although the positive contact 62 has six force-fitting lugs 67 in the illustrated embodiment, the number of force-fitting lugs may be changed in accordance with the necessary power for holding the battery 1, or the size of the battery 1. Also the number of engaging lugs 68 may change in accordance with the size of the circuit board area available for mounting the positive connector 62, or the size of the individual engaging lug 68 itself.

The negative contact 61 is shaped into an approximately cylindrical pole having a smaller diameter than the positive contact 62, and is mounted to the subsidiary circuit board 63 in the center of the positive contact 62, i . e . , concentrically with the positive contact 62. The negative contact 61 is formed as an integral body from a metal by stamping or the like, and has a fit-in projection 70, a flange 71, an engaging portion 72 and a soldering portion 73. The fit-in projection 70 is shaped into a column or pin whose diameter is adjusted to the internal diameter of the negative electrode 21 of the battery 1, so that the fit-in projection 70 is fitted in the negative electrode 21 to make the electric connection with each other. The flange 71 is placed on an end of the fit-in projection 70 or at the border between the fit-in projection and the engaging portion 72. The soldering portion 73 is placed on opposite end of the engaging portion from the fit-in projection 70. The engaging portion 72 is put through engaging hole 63b of the subsidiary circuit board 63 till the flange 71 comes into contact with the subsidiary circuit board 63, and then the soldering portion 73 is bent to mount the negative contact 61 to the subsidiary circuit board 63 by calking. Thereafter, the soldering portion 73 is soldered on the subsidiary circuit board 63. In this way, the negative contact 61 is securely mounted and electrically connected to the subsidiary circuit board 63.

The battery 1 can be securely fitted in the battery holder 60 just by pushing the battery 1 into the battery holder 60 in its axial direction, with its one end portion having the opposite electrodes 21 and 22 forward. In this way, the battery 1 is held in the battery holder 60, and is mounted together with the flash device 47 to the body basic portion 49 of the lens-fitted photo film unit 31. Thereafter, the flash device 47 with the battery 1 is covered with the front and rear cover portions 50 and 51.

After the lens-fitted photo film unit 31 is collected from the user for the sake of recycling, the battery 1 is easily separated from the negative and positive contacts 61 and 62 just by pulling the battery 1 in its axial direction. Therefore, it is very easy to exchange the battery 1. Furthermore, because the negative and positive contacts 61 and 62 have only to hold one end portion of the battery 1, they can be so small that they are hardly deformed or loose resiliency due to metal fatigue, even after many times of battery exchanging.

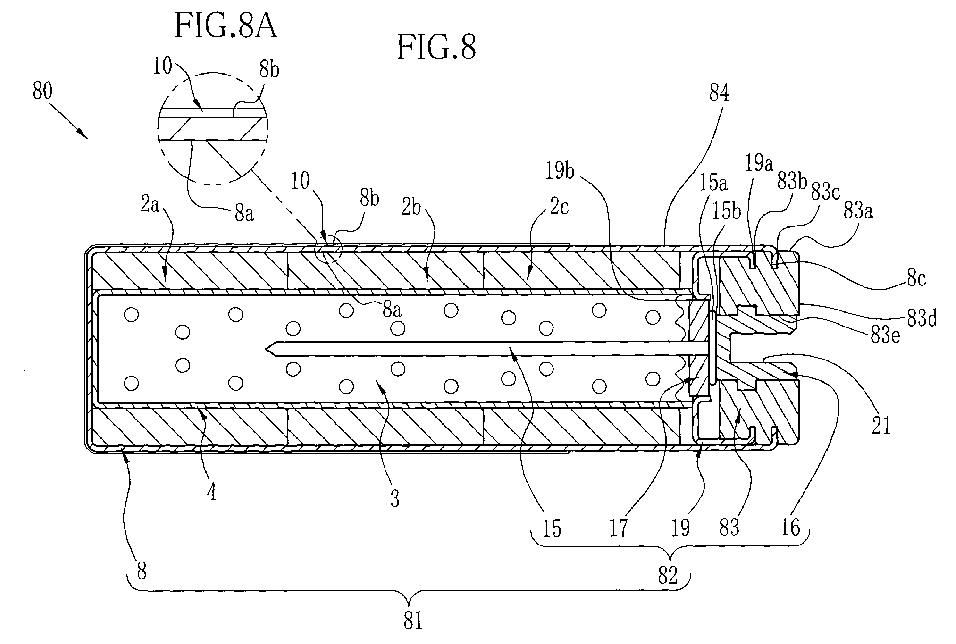

In the above described embodiment, the positive electrode 22 of the battery 1 is constituted of the rim 22a of the cylindrical case shell 8 that is placed on the end face of the battery 1, and the end portion 22b of the cylindrical periphery. But it is possible that the positive electrode is located only around an end portion of the cylindrical periphery of the battery, for example, as shown in Fig. 8. It is to be noted that the same or like elements will be designated by the same reference numerals as in the above embodiment, so the following description will refer only to those elements which are essential to the embodiment shown in Fig.8.

The battery 80 shown in Fig. 8 has a casing 81 that consists of a case shell 8 and a sealing device 82. The sealing device 82 consists of a negative collector 15, a negative terminal member 16, a gasket 17, a sealing ring 83 and a fixation ring 19. The sealing ring 83 is formed from an isolating resin, and has a couple of circular grooves 83b and 83c around its outer periphery 83a. Through a center opening 83e of the sealing ring 83, a negative electrode 21 formed as a center recess of the negative terminal member 16 is exposed from an end face 83d of the sealing ring 83.

To fit the sealing device 82 in the case shell 8, the negative collector 15 having the negative terminal material 16, the gasket 17, the sealing ring 19 and the fixation ring 19 fitted thereon is stuck into the negative electrolyte 3. Thereafter, a rim 8c of the case shell 8 is engaged in the groove 83c of the sealing ring 83. The case shell 8 is partly covered with an isolating label 10 after being sealed with the sealing member 82, so that merely an end portion 84 of a cylindrical peripheral surface 8b of the case shell 8 is exposed. The end portion 84 is placed around the periphery of the negative electrode 21, and serves as a positive electrode. The battery 80 shown in Fig.8 can be used in the same way as the battery 1, in connection with the contacts 61 and 62.

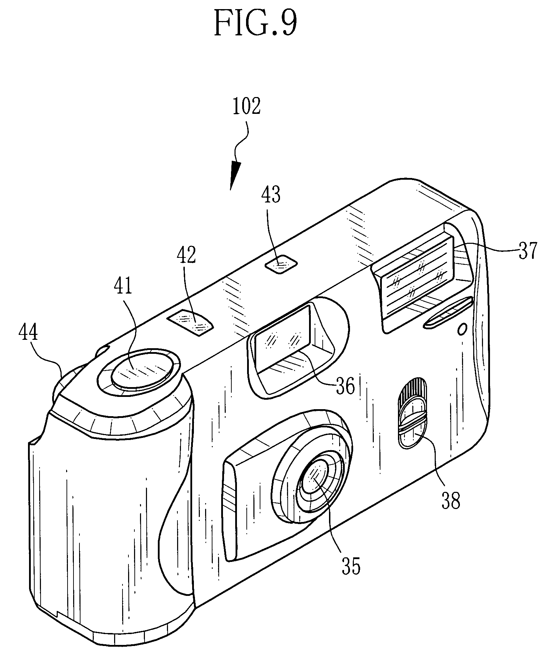

Fig.9 shows a lens-fitted photo film unit 102 according to another embodiment of the present invention, wherein like elements are designated by the same reference numerals as the above embodiment, so that the following description relates only to those parts essential to this embodiment.

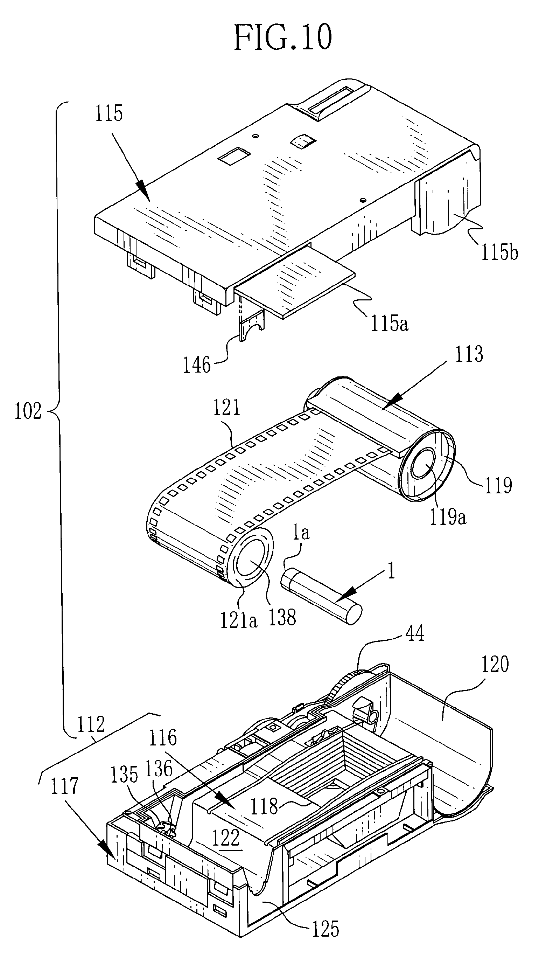

As shown in Fig. 10, the lens-fitted photo film unit 102 is constituted of a body basic portion 116, a photographic film cartridge 113, a battery 1, a rear cover portion 115 and a front cover portion 117. Like the embodiment shown in Fig.5, an exposure device and a flash unit are removably mounted to a front side of the body basic portion 116, and covered with the front cover portion 117, thereby constituting a main body portion 112. The body basic portion 116 is formed integrally with a picture aperture 118, a cartridge chamber 120 for holding a cartridge shell 119, and a film roll chamber 122 for holding a roll 121a of unexposed photo filmstrip 121 that is previously withdrawn from the cartridge shell 119. A film winding wheel 44 is pivotally mounted on a top wall of the cartridge chamber 120, such that a shaft of the film winding wheel 44 is engaged with a spool 119a of the cartridge shell 119 when the cartridge shell 119 is loaded in the cartridge chamber 120. The filmstrip 121 is wound into the cartridge shell 119 after each exposure, by rotating the film winding wheel 44 in a wind-up direction.

The body basic portion 116 has an open rear side, so that the photo film cartridge 113 is loaded from the rear side. Thereafter, the rear side is closed light-tightly with the rear cover portion 115. The film roll chamber 122 and the cartridge chamber 120 are also open in their bottoms. The rear cover portion 115 is formed integrally with a pair of bottom lids 115a and 115b, to close the bottoms of the film roll chamber 122 and the cartridge chamber 120 respectively. Each of the lids 115a and 115b joins through a thin wall groove to a rear wall of the rear cover portion 115, so they can flap open and close. As will be described later, the bottom lid 115a is opened to remove the battery 1 from the film roll chamber 122 in the recycling process. The other bottom lid 115b is opened to remove the photo film cartridge 113 after the filmstrip 121 is fully exposed and wound into the cartridge shell 119.

The film roll chamber 122 has a semi-cylindrical internal wall with the rear side open. A stop wall 125 is formed at the bottom of the film roll chamber 122. The stop wall 125 protrudes inwards in a radial direction of the film roll 121, to confine the axial position of the film roll 121a.

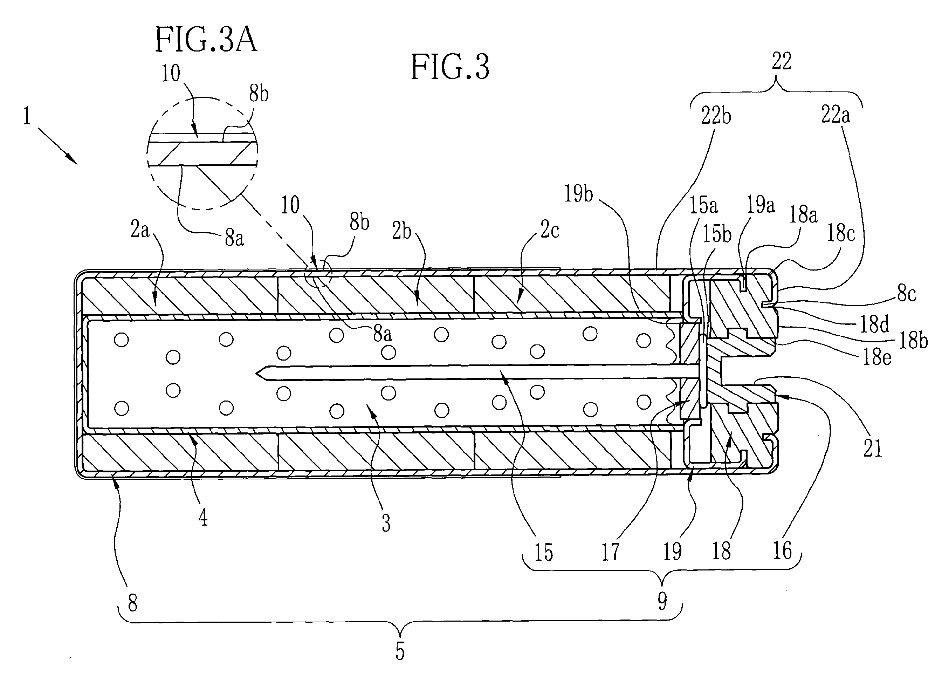

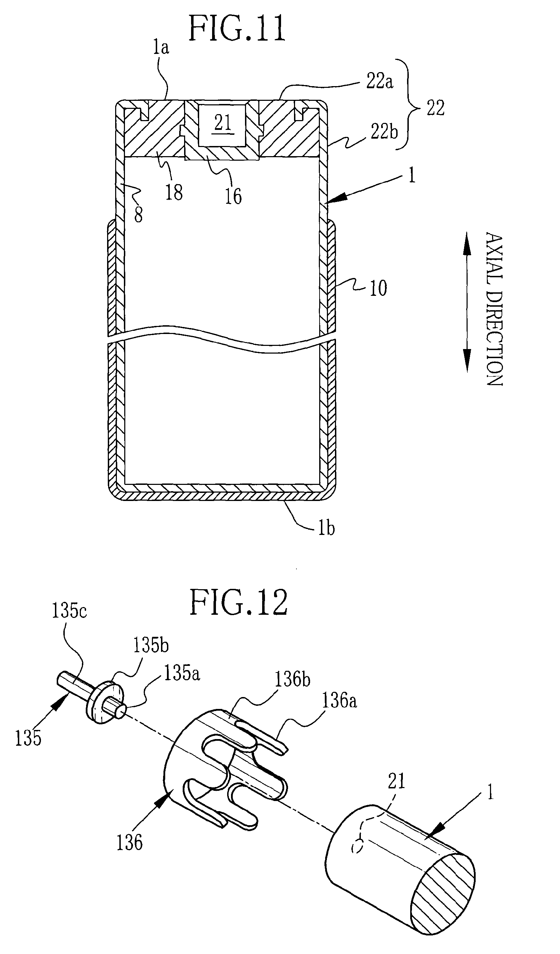

As shown in Fig.11, the battery 1 has a cylindrical shape that is elongated in its axial direction, and has opposite electrodes 21 and 22 in different positions of one end portion 1a, hereinafter called the first end 1a. In this embodiment, the battery 1 shown in Fig.11 is substantially equivalent to that shown in Fig.3, so that the detailed description of the battery 1 will be omitted to avoid redundancy. In this embodiment, the battery 1 is approximately equal in shape to the conventional AAA size battery.

Fig.12 shows negative and positive contact members 135 and 136 for the battery 1. The negative contact 135 is formed from an electro conductive material to have a fit-in portion 135a, a flange 135b and a lead terminal 135c. The fit-in portion 135a is fit in a central recess of the negative terminal member 16. As the recess constitutes the negative electrode 21, the negative contact 135 is thus connected electrically to the negative electrode 21. A positive contact 136 for the positive electrode 22 is a ring having a number of force-fitting lugs 136a arranged at regular intervals around its circumference. The internal diameter of the positive contact 136 is adjusted to fit on a cylindrical end portion 22b of the peripheral surface of the battery 1. Since the end portion 22b constitutes the positive electrode 22, the positive contact 136 is thus connected to the positive electrode 22 by fitting the first end 1a in the positive contact 136.

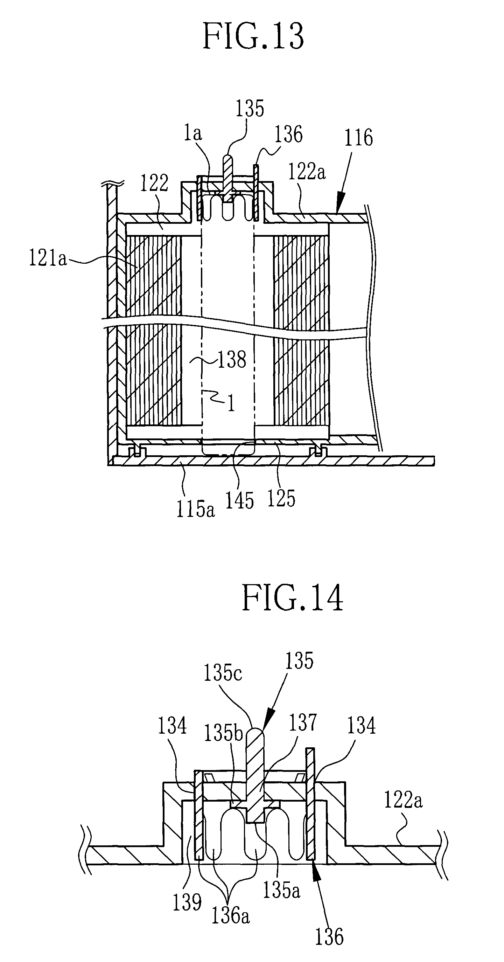

As shown in Fig.13, the film roll 121a unwinds itself in the film roll chamber 122 till the outermost convolution of the film roll 121a comes to contact with the internal wall of the film roll chamber 122. As a result, a hollow 138 is formed inside the film roll 121a. The battery 1 is inserted in the hollow 138 from the bottom of the film roll chamber 122, with its axial or lengthwise direction in parallel to the rotary axis of the film rill 121a, such that the first end 1a having the opposite electrodes 21 and 22 is placed in an upper portion of the film roll chamber 122, i.e., on the opposite end of the film roll chamber 122 from the bottom lid 115a.

As shown in detail in Fig.14, the film roll chamber 122 has a top wall 122a that is stepped out at its center area, to provide a room 139 above the hollow 139 of the film roll 121 in the film roll chamber 122. The negative and positive contacts 135 and 136 are mounted to the center of the top wall 122a so that they do not protrude down from the room 139. The negative contact 135 is mounted by putting the lead terminal 135c from inside of the chamber 122 through an opening 137 of the top wall 122a, to protrude it out of the chamber 122. The lead terminal 135c protruding out of the film roll chamber 122 is connected to a flash circuit through a contact chip or a lead wire. The flange 135b stops the negative contact 135 from being pushed out of the top wall 122a while the battery 1 is being connected to the contacts 135 and 136.

The top wall 122a of the film roll chamber 122 is further formed with a number of slots 134, which are arranged in a circle at regular intervals in correspondence with the force-fitting lugs 136a of the positive contact 136. So the force-fitting lugs 136a are put from outside of the film roll chamber 122 through the slots 134, to protrude into the chamber 122. The trailing side of the positive contact 136, which is left out of the film roll chamber 122, is connected to the flash circuit through a contact chip or a lead wire.

When the photo film cartridge 113 is loaded in the lens-fitted photo film unit 102, a leader of the photo filmstrip 121 is engaged with a winding shaft 140, and the winding shaft 40 is turned to wind the photo filmstrip 121 into the film roll 121a with its emulsion surface inside. After the film roll 121a is placed together with the winding shaft 140 in the film roll chamber 122, and the cartridge shell 119 is placed in the cartridge chamber 120 with its spool 119a engaged with the winding wheel 44, the rear cover portion 115 is attached to the rear sides of the film roll chamber 122 and the cartridge chamber 120. Then the winding shaft 140 is separated from the film roll 121a by pulling it in the axial direction. At that time, the film roll 121a is going to follow the winding shaft 140, but is stopped by the stop wall 125.

It is to be noted that the winding shaft 140 has a slit along its leading end portion, and the header of the photo filmstrip 121 is put in the slit for engagement. The leading end portion has a diameter that is equal to or smaller than a base portion of the winding shaft 140 that is left outside the lens-fitted photo film unit 102 while the leading end portion of the winding shaft 140 is placed in the film roll chamber 122 during the winding process.

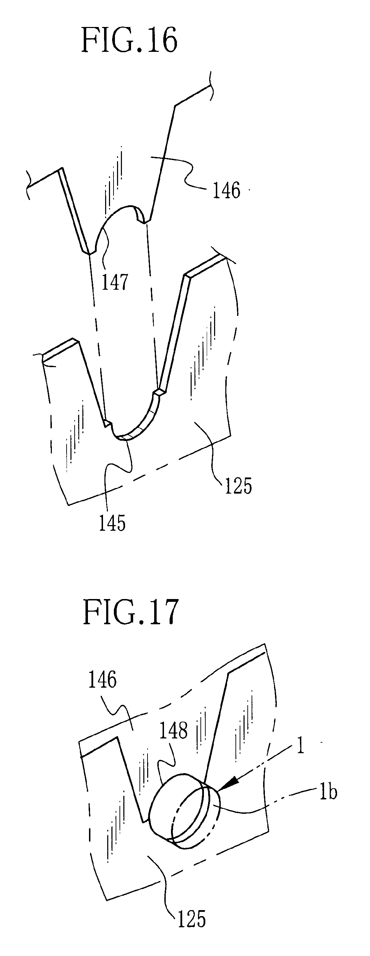

The stop wall 125 is formed with a substantially semi-circular cutout 145, as shown in detail in Fig.16. On the other hand, the rear cover portion 115 is formed with a projection 146 in a bottom position opposing to the stop wall 125 when the rear cover portion 115 is attached to the main body portion 112. The projection 146 also has a semi-circular cutout 147 in its free end.

When the rear cover portion 115 is attached to the main body portion 112, the cutout 147 of the projection 146 is mated to the cutout 145 of the stop wall 125, forming a circular opening 148, as shown in Fig.17. The opening 148 is sized to permit pulling the winding shaft 140 out of the film roll 121a through the opening 148, while keeping the winding shaft 140 in parallel to the rotary axis of the film roll 121a. Furthermore, the opening 148 has a diameter that is equal to or larger than the external diameter of the battery 1.

So the battery 1 may be inserted through the opening 148 into the hollow 138 of the film roll 121a, after the winding shaft 140 is pulled out through the opening 148. Because the cylindrical periphery of the battery 1 is confined by the rim of the opening 48, the axial direction of the battery 1 is kept in parallel to the rotary axis of the film roll 121a. Where the battery 1 is inserted fully into the hollow 138, the first end 1a of the battery 1 is fitted in the negative and positive contacts 135 and 136, whereas a second or trailing end 1b of the battery 1 remains out of the opening 148. The trailing end 1b of the battery 1, which protrudes out of the opening 148, is brought into contact with the bottom lid 115a of the rear cover portion 115 as the bottom lid 115a is closed. Thus, the battery 1 is fixedly positioned in the axial direction.

Now the manufacturing method of the lens-fitted photo film unit 102 will be described.

First, the exposure device and the flash unit are mounted to the body basic portion 116, and the front cover portion 117 is attached to the front of these members, to make up the main body portion 112.

The main body portion 112 is fed in a dark room. In the dark room, the main body portion 112 is placed in a film loading position with its rear side up. Also the photo film cartridge 113 is sequentially fed to the film loading position. After the leader of the photo filmstrip 121, which initially protrudes from the cartridge shell 119, is engaged in the slit of the winding shaft 140, the winding shaft 140 is moved away from the cartridge shell 119 to pull the photo filmstrip 121 out of the cartridge shell 119. The distance of the winding shaft 140 from the spool 119a of the cartridge shell 119 is adjusted to a distance between the rotary axes of the cartridge chamber 120 and the film roll chamber 122. While the winding shaft 140 is kept in the determined distance from the cartridge shell 119, the winding shaft 140 is turned by a driving force of a motor, to coil the photo filmstrip 121 around the winding shaft 140.

While the motor is being driven, the rotational number of the winding shaft 140 is counted to measure the length of the pulled-out portion of the photo filmstrip 121. When the photo filmstrip 121 is fully pulled out, the motor is stopped. In this way, the film roll 121a is formed around the leading end portion of the winding shaft 140.

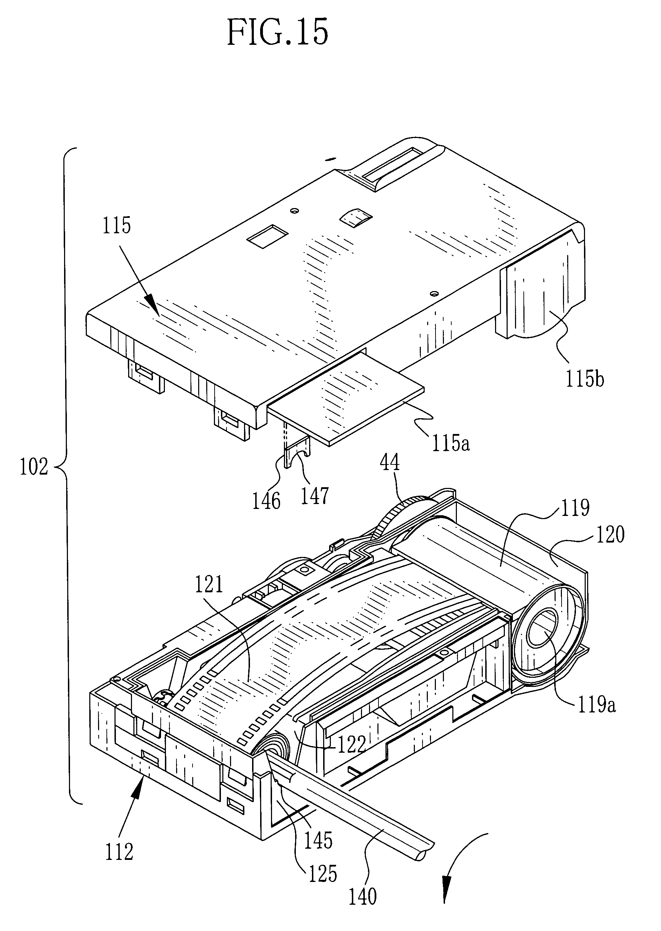

Thereafter, as shown in Fig. 15, the cartridge shell 119 and the leading end portion of the winding shaft 140 having the film roll 121a are put in the cartridge chamber 120 and the film roll chamber 122 respectively, while the cartridge shell 119 and the winding shaft 140 are kept in the predetermined distance from each other by a not-shown holding tool that holds the cartridge shell at its bottom side and a holding tool of the winding shaft 140. Because the contacts 135 and 136 are placed in the room that is formed by the stepped portion 139 of the upper wall 122a of the film roll chamber 122, the contacts 135 and 136 will not be damaged by the winding shaft 140.

When the film roll 121 is put in the film roll chamber 122, the base portion of the winding shaft 140 protrudes out of the main body portion 112 through the cutout 145. In this condition, the rear cover portion 115 is attached to the main body portion 112. Then, the opening 148 is formed by the semi-circular cutout 145 of the stop wall 125 and the semi-circular cutout 147 of the projection 146, whereas the base portion of the winding shaft 140 still protrudes outside through the opening 148. Thereafter, the winding shaft 140 is separated from the film roll 121a by being pulled out axially through the opening 148. Simultaneously, the holding tool of the cartridge shell 119 is removed from the cartridge shell 119 by being pulled in the axial direction of the spool 19a.

With the winding shaft 140 being pulled out, inner convolutions of the film roll 121a are also pulled along with the winding shaft 140, so the bottom end face of the film roll 121a is going to protrude spirally out of the film roll chamber 122. But the stop wall 125 stops the axial movement of the film roll 121a.

After the winding shaft 140 is pulled out, the film roll 121a unwinds itself because of its resiliency. As a result, the hollow 138 is formed inside the film roll 121a. Because the rear cover portion 115 is formed with a concave film supporting surface, which is not shown but conventional in the field of the lens-fitted photo film unit. So the film roll 121a is kept in a regular cylindrical shape without being get oval or eccentric.

The battery 1 is inserted through the opening 148 into the hollow 138, in the axial direction with the first end 1a forward. The film roll chamber 122 is so dimensioned that the internal diameter of the unwound film roll 121a gets larger than the external diameter of the battery 1, so that the battery 1 may be inserted into the hollow 138 without interfering with the photo filmstrip 121.

In the present embodiment, the hollow 138 is formed as the result of unwinding of the film roll 121a that is caused by separating the winding shaft 140 from the film roll 121a. It is alternatively possible to use a winding shaft whose external diameter is equal to or larger than that of the battery 1, so as to make the hollow 138 large enough to accept the battery 1 even before the film roll 121a is unwound.

By pushing the battery 1 fully into the hollow 138, the first end 1a is connected to the opposite contacts 135 and 136. Concretely, the fit-in portion 135a of the negative contact 133 is fitted in the recessed negative electrode 21, while the end portion 22b of the cylindrical peripheral surface of the battery 1 is fitted in the force-fitting lugs 136a of the positive contact 136. As the end face of the first end 1a comes to contact with the flange 135b, the battery 1 is stopped from being pushed further into the film roll chamber 122. The flange 135b is sized to get into contact only with the isolating sealing ring 18 of the battery 1, so the negative contact 135 would not make contact with the positive electrode 22 of the battery 1. Because the battery 1 is force-fitted with the contacts 135 and 136, the battery 1 is prevented from rotating with the film roll 121.

After the battery 1 is loaded in this way, the bottom lids 115a and 115b are closed to shield the film roll chamber 122 and the cartridge chamber 120 light-tightly. By closing the bottom lid 115a, not only the film roll chamber 122 is shielded from the light, but also the battery 1 is stopped from slipping out. After the bottom lids 115a and 115b are closed, the lens-fitted photo film unit 102 is fed out of the dark room and sent to a shipping process, where the lens-fitted photo film units 102 are packaged and shipped out.

Although the film roll 121a is made in a dark room in the above embodiment, it is possible to make it in a lighted room. In that case, the winding shaft 140 engaged with the film leader and the cartridge shell 119 are put in the film roll chamber 122 and the cartridge chamber 120 respectively, and then the rear cover portion 115 is attached to the main body portion 112. After the bottom lid 115b of the cartridge chamber 120 is closed the winding shaft 140 starts turning to make the film roll 121a in the film roll chamber 122. Although a leading portion of the film leader, which is down out from the cartridge shell 119 before the main body portion 112 is covered with the rear cover portion 115, is exposed, because the leasing portion is not used for photography, this would not cause any trouble. To prevent light from entering through the opening 148, it is desirable to make the base portion of the winding shaft 140 have an approximately equal external diameter to the external diameter of the battery 1, i.e. the internal diameter of the opening 148. Thereby, the opening 148 is closed with the base portion of the winding shaft 140 during the winding process.

After the film roll 121a is made in the film roll chamber 122, the winding shaft 140 is pulled out, and the battery 1 is inserted in place of the winding shaft 140. Thereafter the bottom lid 115a is closed. Although the light will enter through the opening 148 for a time after the winding shaft 140 is pulled out till the battery 1 is inserted, the exposure time is very short, and also the exposed innermost convolution of the film roll 121a belongs to the film leading portion that is not used for photography. Therefore, the lens-fitted photo film unit 102 can be manufactured in this way in the lighted room.

The lens-fitted photo film unit 102 configured as above is to be used and recycled in the following manner.

To take a picture, the shutter button 41 is pressed down after the film winding wheel 44 is turned to wind up the photo filmstrip 121 by a predetermined length into the cartridge shell 119. Because the innermost convolution of the film roll 121a is not in contact with the outer periphery of the battery 1, the battery 1 does not turn about even while the film roll 121a is turned with the winding operation of the winding wheel 44.

To make a flash photography, the flash charge switch 38 is turned on before releasing the shutter. Then, the battery 1 supplies the electric power through the contacts 135 and 136 to the flash circuit, for charging it. At the completion of charging, a flash charge completion indicator 43 starts lighting, to indicate that the lens-fitted photo film unit 102 is ready for the flash photography.

As the last available exposure is finished, an exposure counter window 42 indicates that all available exposures have been done. At the same time, the film winding wheel 44 is enabled to rotate endlessly. So it becomes possible to turn the film winding wheel 44 till the whole length of the photo filmstrip 121 is wound up into the cartridge shell 119. After the whole length of the photo filmstrip 121 is contained in the cartridge shell 119, the film roll chamber 122 merely holds the battery 1.

The lens-fitted photo film unit 102, after the completion of all available exposures, is forwarded to a photo-lab for printing. In the photo-lab, the bottom lid 115b is opened to remove the photo film cartridge 113 containing the exposed photo filmstrip 121 in the cartridge shell 119 from the cartridge chamber 120. The exposed photo filmstrip 121 is processed for development and printing. Subsequent photo prints and the developed photo filmstrip 121 are forwarded back to the user. The used lens-fitted photo film unit 102 containing no film cartridge is collected by a recycling factory.

The used lens-fitted photo film unit 102 is fed to a disassembling process. In the disassembling process, the front cover portion 17 is removed and, thereafter, the bottom lid 115a of the film roll chamber 122 is opened to remove the battery 1. Because the trailing end 1b of the battery 1 is exposed just by opening the bottom lid 115a, and the electric connection is made only on the opposite end 1a through the contacts 135 and 136, the battery 1 can be disconnected from the contacts 135 and 136 and removed from the film roll chamber 122 just by nipping the trailing end 1b and pulling the battery 1 in the axial direction out of the film roll chamber 122. Since there is not any contact member on the side of the bottom lid 115a, it is not necessary to bend a contact in order to remove the battery, nor remount a contact for recycling, like in the prior art. Therefore, the lens-fitted photo film unit of the present invention is easy to recycle, and maintains the electric connection stable for a long time.

After the battery 1 is removed, a main capacitor of the flash unit is discharged, and the flash unit is removed from the body basic portion 116. Then the exposure device, the film winding wheel 44 and the rear cover portion 115 are removed from the body basic portion 116. The disassembled parts are inspected and sorted into reusable ones and those to be recycled as raw materials.

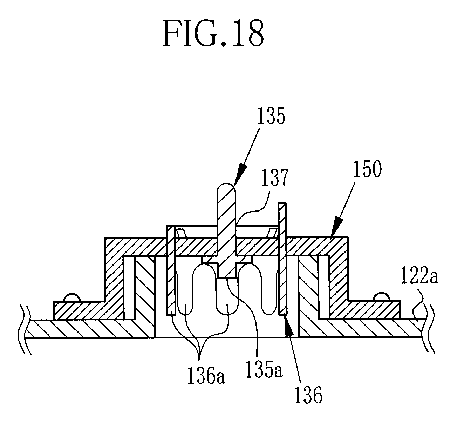

According to the above embodiment, the contacts 135 and 136 are mounted directly to the top wall 122a of the film roll chamber 122. But it is possible to mount the contacts 135 and 136 previously to a base member 150, and attach the base member 150 to a top wall 122a of the film roll chamber 122, as shown in Fig.18. This configuration is preferable in order to facilitate assembling the contacts 135 and 136 in the film roll chamber 122.

In the above embodiment, the rear cover portion 115 is equivalent to a light-shielding cover of the present invention. But the light-shielding cover may be constituted of a plurality of covers.

Although the bottom lid 115a, which corresponds to a lid member of the present invention, is formed integrally with the light-shielding cover in the above embodiment, it is possible to form the lid member separately from the light-shielding cover. The separate lid member may be removably force-fitted in the bottom of the film roll chamber, or may be mounted to slide in a perpendicular direction to the rotary axis of the film roll.

It is also possible to make a film roll by winding the unexposed photo filmstrip around a spool, and load the spool with the film roll around it in the film roll chamber. In that case, a hollow is formed in the spool throughout its axial length, for accepting the battery 1 in that hollow in the film roll chamber. According to this embodiment, the winding shaft 140 is unnecessary. By providing the spool with flanges, the position of the film roll around the spool is confined in the axial direction, so that it becomes possible to omit the stop wall 125 and the projection 146.

Although the battery is inserted into or removed from the film roll chamber through its bottom side in the lens-fitted photo film unit of the above embodiment, the present invention is applicable to a lens-fitted photo film unit whose film roll chamber may be opened at its top side. In that case, electric contact members for the battery are mounted in the bottom of the film roll chamber.

Although the negative electrode 21 is formed as a recessed portion in the end face of the battery, the negative electrode can be flat to the end face.

Although the battery is used for supplying the flash unit in the above embodiments, the battery of the present invention may supply any other electric devices, for example, a data recording device that records date data or other kinds of data on the photo filmstrip, or a stop size change-over mechanism.

Although the battery of the invention and the battery holder for use with the inventive battery have been described with respect to those cases where they are applied to the lens-fitted photo film units, the inventive battery and battery holder are also applicable to a compact camera and any other devices that use a battery as a power source.

Although the battery of the above embodiment is an alkaline battery, the battery of the invention is not to be limited to the alkaline battery, but may be other kinds of dry batteries, including alkaline-manganese battery, manganese battery, nickel-manganese battery, or rechargeable batteries like nickel-cadmium battery. Concerning other batteries than the alkaline battery or alkaline-manganese battery, it is possible to change the positions of the positive and negative electrodes from the above embodiments. That is, the positive electrode may be placed in the center of an end face of the battery, while the negative electrode may be placed around the periphery of the positive electrode.

As described so far, the present invention is not to be limited to the illustrated embodiments but, on the contrary, various modifications will be possible without departing from the scope and spirit of claims appended hereto.

## Claims

1. A battery having a cylindrical shape, wherein opposite electrodes (21,22) are disposed on one end portion of said battery.

2. A battery as claimed in claim 1, comprising a cylindrical periphery (8b) and opposite end faces that extend substantially perpendicularly to said cylindrical periphery, wherein a first one (21) of said electrodes is placed in a center of one of said end faces, whereas a second one (22) of said electrodes comprises an end portion (22b) of said cylindrical periphery, that is placed around said first electrode.

3. A battery as claimed in claim 2, wherein said first electrode (21) is formed as a recessed portion in said one end face.

4. A battery as claimed in claim 2, wherein said first electrode is negative, whereas said second electrode is positive.

5. A pair of electric contact members for a battery as claimed in claim 1, wherein said contact members (61,62) hold said one end portion of said battery, while being connected electrically to said opposite electrodes (21,22) of said battery.

6. A pair of electric contact members as claimed in claim 5, wherein a first one (21) of said electrodes is formed as a recessed portion in a center of one end face of said battery, and a second one (22) of said electrodes is placed around said first electrode and comprises an end portion (22b) of a cylindrical periphery of said battery, whereas said contact members (61,62) comprise a projection (70) that is fitted in said recessed portion, and a ring member (66,67) that is fitted on said end portion of said cylindrical periphery of said battery.

7. A method of connecting a cylindrical battery to a circuit board comprising steps of:
forming said battery to have opposite electrodes (21,22) on its one end portion; and
mounting a pair of electric contact members (61,62) on said circuit board, said contact members being configured to hold said one end portion of said battery, while being connected electrically to said opposite electrodes.

8. A method of connecting a cylindrical battery to a circuit board as claimed in claim 7, wherein a first one (21) of said electrodes is formed as a recessed portion in a center of one end face of said battery, and a second one (22) of said electrodes is placed around said first electrode and comprises an end portion (22b) of a cylindrical periphery of said battery, whereas said contact members comprise a projection (70,135a) that is fitted in said recessed portion, and a ring member (66,67,136) that is fitted on said end portion of said cylindrical periphery.

9. A lens-fitted photo film unit preloaded with a photo film cartridge and having a photographic mechanism and at least an electric device incorporated therein, said lens-fitted photo film unit comprising:
a film roll chamber (122) containing a roll (121a) of said unexposed photo filmstrip that is previously withdrawn from a cartridge shell of said photo film cartridge;
a cylindrical battery (1) for supplying power to said electric device, said battery being placed in a hollow (138) that is formed inside said film roll in said film roll chamber, with an axial direction of said battery in parallel to a rotary axis of said film roll, said battery having opposite electrodes (21,22) on its one end portion (1a) that is placed in an innermost position of said film roll chamber with respect to an inserting direction of said battery into said hollow; and
a pair of electric contact members (135,136) disposed in said innermost position of said film roll chamber, said contact members holding said one end portion of said battery, while being connected to said opposite electrodes of said battery.

10. A lens-fitted photo film unit as claimed in claim 9, wherein a first one (21) of said electrodes is formed as a recessed portion in a center of one end face of said battery, and a second one (22) of said electrodes is placed around said first electrode and comprises an end portion (22b) of a cylindrical periphery of said battery, whereas said contact members comprise a projection (135a) that is fitted in said recessed portion, and a ring member (136) that is fitted on said end portion of said cylindrical periphery of said battery.

11. A lens-fitted photo film unit as claimed in claim 9, wherein said film roll is formed around a spool having a hollow along its rotary axis throughout its length, said battery being inserted in said hollow of said spool.

12. A lens-fitted photo film unit having a photographic mechanism and at least an electric device incorporated therein, and containing a roll of unexposed photo filmstrip that is previously withdrawn from a cartridge shell and coiled into the roll by use of a winding shaft (140), said lens-fitted photo film unit comprising:
a film roll chamber having an open rear side and an open bottom side, for permitting loading said film roll (121a) in said film roll chamber (122);
a light-shielding cover (115) for covering the rear side of said film roll chamber in a light-tight fashion;
a stop wall (125) formed at the bottom of said film roll chamber to protrude radially inwards from a semi-cylindrical inner wall of said film roll chamber, for stopping said film roll from moving in its axial direction and slipping out of said film roll chamber;
a cutout (145) formed through said stop wall, for permitting pulling said winding shaft out of said film roll after said film roll is placed in said film roll chamber;
a cylindrical battery (1) for supplying said electric device, said battery having opposite electrodes (21,22) on its one end portion and being placed in a hollow (138) that is formed inside said film roll after said winding shaft (140) is pulled out of said film roll through said cutout, said battery being inserted into said hollow through said cutout with said one end portion (1a) placed forward and with its axial direction in parallel to a rotary axis of said film roll; and
a lid member (115a) for closing the bottom side of said film roll chamber, said lid member covering said stop wall in its closed position, and being opened to remove said battery from said film roll chamber.

13. A lens-fitted photo film unit as claimed in claim 12, further comprising a pair of electric contact members (135,136) disposed in an uppermost position (139) of said film roll chamber to hold said one end portion (1a) of said battery while being connected to said opposite electrodes (21,22).

14. A lens-fitted photo film unit as claimed in claim 13, wherein a first one (21) of said electrodes is formed as a recessed portion in a center of one end face of said battery, and a second one (22) of said electrodes is placed around said first electrode and comprises an end portion (22b) of a cylindrical periphery of said battery, whereas said contact members comprise a projection (135a) that is fitted in said recessed portion, and a ring member (136) that is fitted on said end portion of said cylindrical periphery of said battery.

15. A lens-fitted photo film unit as claimed in claim 12, wherein said light-shielding cover comprises a protrusion (146) that protrudes perpendicularly to the rotary axis of said film roll so as to mate with said stop wall, said protrusion having a cutout (147) that forms an opening (148) in combination with said cutout (145) of said stop wall (125), said opening (148) having a size to permit said winding shaft and said battery to go through it.

16. A lens-fitted photo film unit as claimed in claim 15, wherein said cutouts (145,147) of said stop wall and said protrusion are both semi-circular to form a round opening (148) whose diameter is equal to or slightly larger than an external diameter of said battery.

17. A method of manufacturing a lens-fitted photo film unit that comprises a photographic mechanism, at least an electric device, a film roll chamber (122) containing a roll of unexposed photo filmstrip (121), a light-shielding cover (115) covering an open rear side of said film roll chamber, a bottom lid (115a) for closing a bottom side of said film roll chamber, and a stop wall (125) protruding radially inwards from an inner wall of said film roll chamber, said stop wall being in contact with a bottom end face of said film roll (121a) for stopping said film roll from slipping out of said film roll chamber, said stop wall being located inside said bottom lid when said bottom lid closes the bottom side of said film roll chamber, said method comprising steps of:
using a cylindrical battery (1) for supplying said electric device, said battery having opposite electrodes (21,22) on its one end portion (1a);
mounting a pair of contact members (135,136) for said battery in said film roll chamber at its uppermost position (139);
withdrawing said unexposed photo filmstrip (121) from a cartridge shell (119) and winding said filmstrip around a winding shaft (140);
covering the open rear side of said film roll chamber with said light-shielding cover (115a), after said winding shaft with said unexposed photo filmstrip around it is placed in said film roll chamber;
pulling, thereafter, said winding shaft (140) out of said film roll through a cutout (125) formed through said stop wall;
inserting said battery through said cutout into a hollow (138) that is formed inside said film roll after said winding shaft is pulled out of said film roll, with said one end portion (1a) of said battery placed forward and with its axial direction in parallel to a rotary axis of said film roll till said opposite electrodes (21,22) are connected to said contact members (135,136); and
closing, thereafter, the bottom side of said film roll chamber with said bottom lid (115a), thereby to stop said battery from moving in its axial direction.
